# EUROPEAN PATENT SPECIFICATION

(11) **EP 4 235 887 B1**
(45) Date of publication and mention of the grant of the patent: **31.12.2025**
(21) Application number: 22878961.6
(22) Date of filing: 07.10.2022
(51) Int. Cl.: H01M 10/04, H01M 50/342, H01M 50/317, H01M 50/105, H01M 50/30

(54) **ACTIVATION APPARATUS FOR SECONDARY BATTERY AND ACTIVATION METHOD THEREFOR**
AKTIVIERUNGSVORRICHTUNG FÜR SEKUNDÄRBATTERIE UND AKTIVIERUNGSVERFAHREN DAFÜR
APPAREIL D'ACTIVATION POUR BATTERIE SECONDAIRE ET SON PROCÉDÉ D'ACTIVATION

(30) Priority: 08.10.2021 KR 20210134412
(43) Date of publication of application: 30.08.2023
(73) Proprietor: LG Energy Solution, Ltd., Seoul 07335 (KR)
(72) Inventor: PARK, Ji Soo, Daejeon 34122 (KR); KIM, Yong Nam, Daejeon 34122 (KR); NOH, So Yeon, Daejeon 34122 (KR); LEE, Young Hyun, Daejeon 34122 (KR)
(74) Representative: Goddar, Heinz J.
(86) International application number: PCT/KR2022/015161
(87) International publication number: WO 2023/059140

(56) References cited:
- JP-A- 2015 088 324
- KR-A- 20200 059 559
- KR-A- 20200 059 559
- KR-A- 20200 085 589
- KR-A- 20200 085 589
- KR-B1- 102 042 775
- KR-B1- 102 197 731
- KR-B1- 102 197 731

## Description

### CROSS-REFERENCE TO RELATED APPLICATION

The present application claims the benefit of the priority of Korean Patent Application No. 10-2021-0134412, filed on October 08, 2021.

### TECHNICAL FIELD

The present invention relates to an activation apparatus for activating a battery cell of a pouch-type secondary battery during an activation process of the secondary battery, and an activation method therefor.

### BACKGROUND ART

The amount of usable fossil fuels is limited as fossil fuels are gradually depleted, and the importance of preventing environmental pollution is also increasing. Therefore, the importance of energy capable of replacing the fossil fuels is increasing. Accordingly, research and development of power production technologies are being actively conducted based on energy sources that have little impact on environmental pollution, such as solar heat, water power, wind power, marine energy, and biomass energy.

In particular, research on repeatedly chargeable secondary battery capable of preventing environmental pollution and providing high energy density has been most actively conducted. Physical, electrical, mechanical, and systematic research and development on materials, efficiency, structures, and processes of the secondary batteries are being conducted in various aspects.

These secondary batteries are mainly classified into cylindrical batteries, prismatic batteries, and pouch-type batteries according to shapes thereof. Therefore, research and development are being conducted to improve energy efficiency and energy density or prevent energy inefficiency according to structural characteristics corresponding to each type of secondary batteries having various shapes.

The secondary batteries have advantages over other types of energy sources in terms of energy efficiency and density, but studies on stability are being conducted to secure higher efficiency along with continuous development of structures, materials, and processes. In particular, various processes are performed in a manufacturing process of the secondary batteries, and thus, precise control of movement, structure, arrangement, and assembly of battery cells is required for each process. Therefore, the stability is of great importance.
KR 2020 0059559 A describes a secondary battery cell degas system for a second battery cell that has a plate-shape structure and includes an electrode/separator assembly in which a first electrode sheet and a second electrode sheet are alternately stacked, a separator is placed between a first electrode sheet and a second electrode sheet, and an electrolyte is impregnated, and a pouch for sealing the electrode/separator assembly.
KR 102 197 731 B1 describes a degas apparatus for manufacturing a secondary battery, including a piercing chamber accommodating a first quantity of degas target pouches, selectively controlling pressure in an internal space between vacuum and atmospheric pressure, and provided with a piercing unit for forming an internal gas discharge path in the first quantity of degas target pouches; a first buffer chamber for maintaining the internal pressure as a vacuum to accommodate the first quantity of degas target pouches discharged from the piercing chamber; a sealing chamber for maintaining the internal pressure as a vacuum, and having a sealing unit sequentially supplied with the first quantity of degas target pouches accommodated in the first buffer chamber by units of a second quantity smaller than the first quantity so as to seal the supplied degas target pouches; a second buffer chamber for maintaining the internal pressure as a vacuum to receive the second quantity of degas target pouches from the sealing chamber and accommodate the received degas target pouches in sequence; and an unloading chamber for receiving and accommodating the first quantity of the degas target pouches from the second buffer chamber, and selectively controlling the pressure of the inner space between the vacuum and the atmospheric pressure.
KR 2020 0085589 A describes a degassing device, which discharges gas generated inside a secondary battery to the outside. According to the present invention, the degassing device comprises: a piercing unit including a piercing body positioned on one surface of a secondary battery and sealing one side of one surface of the secondary battery and a piercing member for forming an open hole by piercing one side of one surface of the secondary battery sealed by the piercing body; and a gas discharge body including a gas discharge body located on the other surface of the secondary battery and sealing one side of the other surface of the secondary battery in which an open hole is formed, and a gas discharge member for discharging gas inside the secondary battery to the outside through the open hole sealed by the gas discharge body. The piercing member forms the open hole penetrating from one side of one surface to one side of the other surface of the secondary battery.

### DISCLOSURE OF THE INVENTION

### TECHNICAL PROBLEM

A pouch-type battery has a shape in which an electrode assembly is accommodated in a pouch-type case, and high energy density may be secured in this type of battery by accommodating, in the case, the electrode assembly in which electrodes and separators are alternately stacked. However, for high stability along with high efficiency, it is essential to discharge gas generated in the pouch-type case during charging and discharging in a battery cell activation process. Also, a high degree of precision/air-tightness in a manufacturing process of a secondary battery is required for gas discharge.

However, the gas collected in the pouch-type case may not be properly removed during the manufacturing process of the secondary battery, and thus, the energy efficiency or safety of the secondary battery due to an increase in internal pressure may be deteriorated during use of the secondary battery.

An object of the present invention for solving the above limitations is to provide an activation apparatus for a secondary battery and an activation method therefor, capable of discharging gases, which may be generated during the manufacturing process of the secondary battery, as much as possible during charging/discharging of the activation process, and also capable of producing a secondary battery that can be stably manufactured/used.

### TECHNICAL SOLUTION

The present invention is defined according to the subject matter of the appended independent claims. Particular embodiments are given by the additional features of the appended dependent claims. An activation apparatus for a secondary battery according to the present invention includes: a first chamber which includes a first conveyance unit for conveying a battery cell and adjusts a vacuum level in a space in which the first conveyance unit is positioned; a vacuum chamber which is spatially connected to the first chamber, includes an activation unit in which the battery cell is disposed so that activation and degassing of the battery cell are performed, and maintains a vacuum state in a space in which the activation unit is disposed; a second chamber which is spatially connected to the vacuum chamber, includes a second conveyance unit for conveying the battery cell, and adjusts a vacuum level in a space in which the second conveyance unit is positioned; a movement line disposed to cross the first chamber, the vacuum chamber, and the second chamber; and a movement member which is connected to the movement line and moves the battery cell along the movement line, wherein piercing of the battery cell is performed in the first chamber, the activation and degassing of the battery cell are performed in the activation unit, and sealing of the battery cell is performed in the vacuum chamber or the second chamber.

The movement member may include a first movement member and a second movement member, wherein the first movement member includes a heating pad on one side surface and a piercing pin on the other surface, and the second movement member includes a vacuum pad on one side surface, wherein the first movement member is rotated to one of a state in which the piercing pin faces the vacuum pad or a state in which the heating pad faces the vacuum pad.

The piercing may be performed by the piercing pin of the first movement member and the vacuum pad of the second movement member, and the sealing may be performed by the heating pad of the first movement member and the vacuum pad of the second movement member.

The activation unit may include a pressing jig, and the pressing jig may be used to press the battery cell during the activation, thereby performing the degassing.

The first chamber may have a first gate, and the first gate may be opened when the vacuum level of the first chamber is adjusted to the vacuum state of the vacuum chamber.

The second chamber may have a second gate, and the second gate may be opened when the vacuum level of the second chamber is adjusted to the vacuum state of the vacuum chamber.

In the sealing of the battery cell by the movement member, first sealing may be performed while the movement member is brought into contact with the battery cell to move the battery cell, and second sealing may be performed while the movement member places the battery cell on the second chamber.

The first chamber may include a first activation tray, and the battery cell conveyed from the first conveyance unit may be disposed on the first activation tray. The second chamber may include a second activation tray, and the battery cell moved from the vacuum chamber may be disposed on the second activation tray.

The battery cell may include a sealing portion in which a degassing portion is formed, wherein a gas inside the battery cell is discharged via the degassing portion by pressing at least a portion of the sealing portion.

The activation of the battery cell may be performed in the activation unit in a state in which the piercing has been performed.

An activation method for a secondary battery according to the present invention may include: conveying a battery cell to a first chamber by using a first conveyance unit, wherein the first chamber adjusts a vacuum level in a space in which the first conveyance unit is positioned; piercing the battery cell in the first chamber by using a movement member; moving the battery cell to a vacuum chamber along a movement line by using the movement member, wherein the vacuum chamber is in a vacuum state and includes an activation unit that performs activation and degassing of the battery cell; performing the activation and degassing of the battery cell in the activation unit of the vacuum chamber; performing sealing of the battery cell by using the movement member; and moving the battery cell to a second chamber along the movement line by using the movement member, wherein the second chamber adjusts a vacuum level.

The activation method for a secondary battery may include using a pressing jig to press the battery cell during the activation, thereby performing the degassing.

The activation method for a secondary battery may include opening a first gate of the first chamber when the vacuum level of the first chamber is adjusted to the vacuum state of the vacuum chamber.

The activation method for a secondary battery may include opening a second gate of the second chamber when the vacuum level of the second chamber is adjusted to the vacuum state of the vacuum chamber.

The activation method for a secondary battery may include performing the activation of the battery cell in the activation unit in a state in which the piercing of the battery cell has been performed.

### ADVANTAGEOUS EFFECTS

An activation apparatus for a secondary battery and an activation method therefor according to the present invention may provide high stability as gases, which may be generated/collected in a pouch during charging/discharging, are efficiently removed in an activation process of a battery cell of the secondary battery.

The activation apparatus for a secondary battery and the activation method therefor according to the present invention may simplify processes and reduce the size of the battery cell as the gases are discharged using a vacuum chamber in the activation process without adding a separate gas removal process.

### BRIEF DESCRIPTION OF THE DRAWINGS

FIG. 1 is a view showing a battery cell of a pouch-type secondary battery according to an embodiment of the present invention.
FIG. 2 is a view showing a movement member according to an embodiment of the present invention.
FIGS. 3A to 3D are views showing states of the movement member according to an embodiment of the present invention and states of the battery cell corresponding thereto.
FIG. 4 is a view showing a gas removing method for a battery cell of a secondary battery according to another embodiment of the present invention.
FIG. 5 is a view showing an activation apparatus for removing a gas from a battery cell of a secondary battery according to another embodiment of the present invention.

### MODE FOR CARRYING OUT THE INVENTION

Hereinafter, embodiments of the present invention will be described in detail with reference to the accompanying drawings so as to be easily carried out by a person skilled in the art to which the present invention pertains. However, the present invention may be embodied in various different forms, and is neither limited nor restricted to the following embodiments.

In order to clearly describe the present invention, detailed description of parts irrelevant to the invention or detailed descriptions of related well-known technologies that may unnecessarily obscure subject matters of the invention will be omitted. In the specification, when reference numerals are given to components in each of the drawings, the same or similar components will be designated by the same or similar reference numerals throughout the specification.

Also, terms or words used in this specification and claims should not be restrictively interpreted as ordinary meanings or dictionary-based meanings, but should be interpreted as meanings and concepts conforming to the technical ideas of the present invention on the basis of the principle that an inventor can properly define the concept of a term so as to describe his or her invention in the best ways.

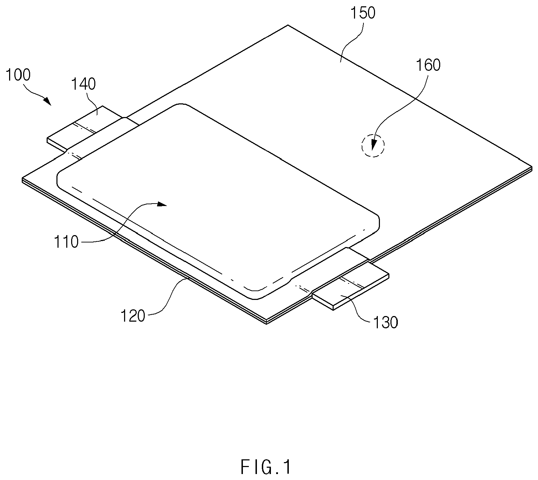

FIG. 1 shows a battery cell of a pouch-type secondary battery according to an embodiment of the present invention.

A battery cell 100 may include an electrode assembly 110, and the electrode assembly 110 may be accommodated in an accommodation part inside a pouch 120. The accommodation part may have a shape corresponding to a shape of the electrode assembly 110.

The battery cell 100 may include electrode leads 130 and 140 that electrically connect the electrode assembly 110 to the outside of the battery cell 100. The electrode leads 130 and 140 are connected to a portion of the electrode assembly 110 and may cross the pouch 120 and be exposed to the outside.

The pouch 120 may include a sealing portion 150 which may seal at least a region around the electrode assembly 110 and collect gas that may be generated during a manufacturing process of the battery cell 100. The sealing portion 150 may seal the battery cell 100 as exterior materials of the pouch 120 are bonded to each other.

A degassing portion 160 may be included in the sealing portion 150. The degassing portion 160 may be a portion through which the gas collected in the sealing portion 150 is discharged.

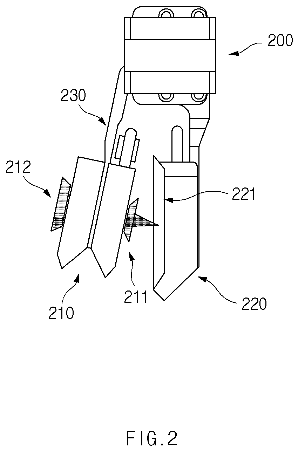

FIG. 2 shows a movement member according to an embodiment of the present invention.

In the activation apparatus for a secondary battery and the activation method therefor according to the present invention, a movement member 200 may serve as a means for moving the battery cell 100.

The movement member 200 may include a first movement member 210 and a second movement member 220 to pick and move the battery cell 100. One side of the first movement member 210 and one side of the second movement member 220 may be brought into contact with both surfaces of the battery cell 100 to pick up the battery cell 100. The battery cell 100 may be picked up and moved along a movement line by the first movement member 210 and the second movement member 220.

The movement member 200 may perform piercing and sealing of the battery cell 100.

As described above, the movement member 200 may include the first movement member 210 and the second movement member 220.

The first movement member 210 may include a piercing pin 211 and a heating pad 212.

The piercing pin 211 may be formed in a direction protruding outward from the first movement member 210. The piercing pin 211 may be formed on one side of the first movement member 210. The piercing pin 211 may perform piercing of the sealing portion 150 or the degassing portion 160 of the battery cell 100.

The heating pad 212 may be formed on the other side of the first movement member 210 opposite to the side on which the piercing pin 211 is disposed. The heating pad 212 may deliver heat and pressure to perform sealing of the sealing portion 150 or the degassing portion 160 of the battery cell 100.

The second movement member 220 may include a vacuum pad 221. The second movement member 220 may include the vacuum pad 221 on one side surface. The vacuum pad 221 may perform piercing of the battery cell 100 together with the piercing pin 211. The vacuum pad 221 may perform sealing of the battery cell 100 together with the heating pad 212.

The movement member 200 may include a rotary member 230. The rotary member 230 may be connected/coupled to the first movement member 210. The rotary member 230 may rotate the first movement member 210. The rotary member 230 may rotate the first movement member 210 by 360 degrees.

The rotary member 230 may rotate the first movement member 210 such that the piercing pin 211 faces (or is opposite to) the vacuum pad 221. The rotary member 230 may rotate the first movement member 210 such that the heating pad 212 faces (or is opposite to) the vacuum pad 221.

The movement member 200 may perform piercing and sealing of the battery cell 100 while moving same.

The movement member 200 may move along the movement line while picking up the battery cell 100 in a state in which the piercing pin 211 of the first movement member 210 faces the vacuum pad 221 of the second movement member 220, and thus may simultaneously perform moving and piercing of the battery cell 100.

The movement member 200 may move along the movement line while picking up the battery cell 100 in a state in which the heating pad 212 of the first movement member 210 faces the vacuum pad 221 of the second movement member 220, and thus may simultaneously perform moving and sealing of the battery cell 100.

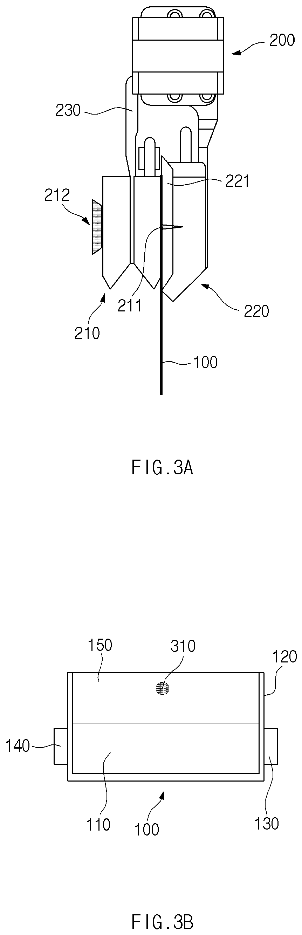

FIGS. 3A to 3D show states of the movement member according to an embodiment of the present invention and states of the battery cell corresponding thereto.

FIGS. 3A and 3B show states in which the movement member 200 may perform piercing and moving.

Referring to FIG. 3A, the piercing pin 211 of the first movement member 210 and the vacuum pad 221 of the second movement member 220 may be coupled while facing each other. The piercing pin 211 and the vacuum pad 221 may fix the battery cell 100 and simultaneously perform piercing of the degassing portion 160 of the battery cell 100.

Referring to FIG. 3B, a piercing hole 310 may be formed in the battery cell 100. The piercing hole 310 may be formed as the piercing pin 211 passes through a region corresponding to the degassing portion 160. The gas collected in the sealing portion 150 or the degassing portion 160 of the battery cell 100 may be discharged to the outside via the piercing hole 310 formed by the piercing pin 211. The vacuum pad 221 may suction the discharged gas.

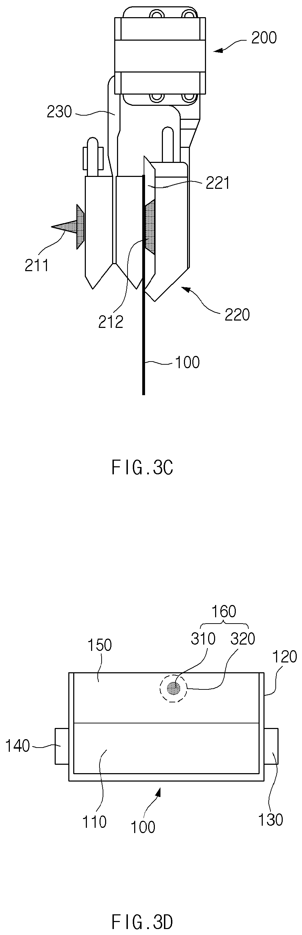

FIGS. 3C and 3D show states in which the movement member 200 may perform sealing and moving.

Referring to FIG. 3C, the heating pad 212 of the first movement member 210 and the vacuum pad 221 of the second movement member 220 may be coupled while facing each other. The heating pad 212 and the vacuum pad 211 may perform sealing of the degassing portion 160 of the battery cell 100 while coming into contact with (or fixing) the battery cell 100.

Referring to FIG. 3D, a sealing region 320 may be formed in the battery cell 100. The sealing region 320 may be formed as a region corresponding to the degassing portion 160 is sealed by the heating pad 212 and the vacuum pad 221. After the gas is discharged via the sealing portion 150 or the degassing portion 160 of the battery cell 100, a region of the degassing portion 160 may be sealed by the heating pad 212 and the vacuum pad 221. Accordingly, the sealing region 320 may be formed. The sealing region 320 may be formed as the region of the degassing portion 160 is sealed by heat and pressure from the heating pad 212 and the vacuum pad 221.

The states of FIGS. 3A and 3B and the states of FIGS. 3C and 3D may be formed according to the rotation of the rotary member 230, and the first movement member 210 may be rotated in a range of 360 degrees by the rotary member 230.

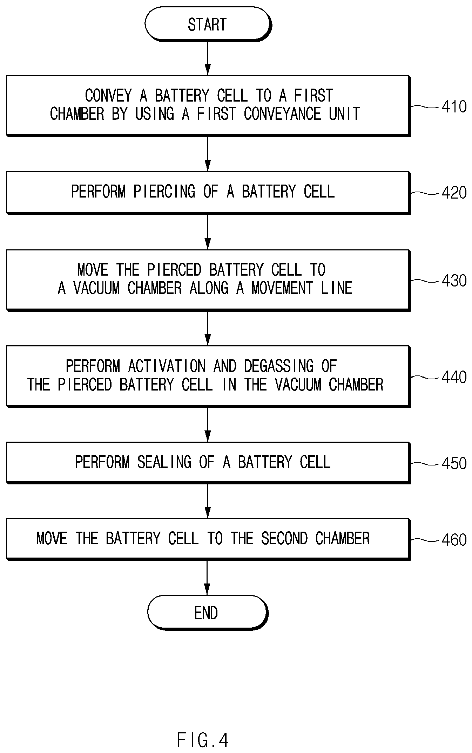

FIG. 4 shows a gas removing method for a battery cell of a pouch-type secondary battery according to another embodiment of the present invention. The activation apparatus for a secondary battery according to the present invention may perform a gas removing method for a battery cell as will be described later.

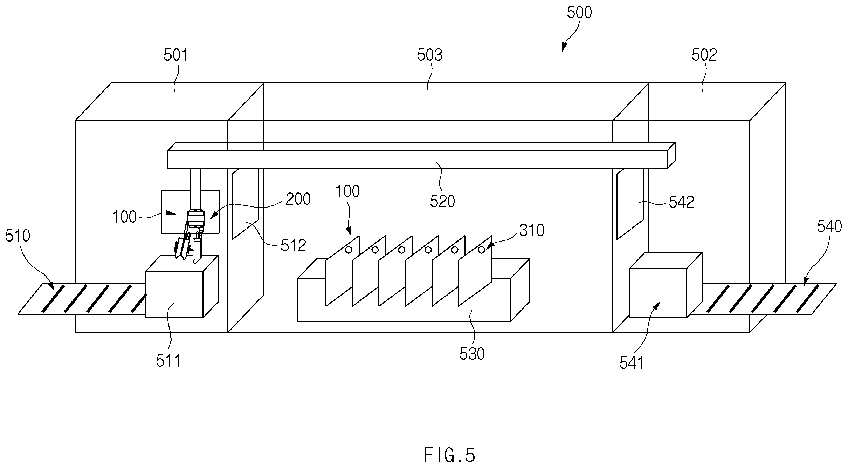

In the activation method of FIG. 4 by the activation apparatus according to the present invention, the activation apparatus performing gas removal for a battery cell of a secondary battery will be described with reference to FIG. 5.

In operation 410, the activation apparatus may convey a battery cell to a first chamber by using a first conveyance unit.

An activation apparatus 500 may include a first chamber 501, a second chamber 502, and a vacuum chamber 503.

The first chamber 501 may adjust a vacuum level inside the first chamber 501. The vacuum level inside the first chamber 501 may be adjusted from an atmospheric state to a vacuum state (e.g., -40 kpa). In the vacuum state, the vacuum level may be defined according to the design. In the present invention, -40 kpa is defined as the vacuum state, but the embodiment is not particularly limited.

A battery cell 100 may be conveyed from the outside of the activation apparatus 500 to the first chamber 501 by a first conveyance unit 510 of the first chamber 501. The battery cell 100 outside the activation apparatus 500 may be placed on a first activation tray 511 inside the first chamber 501 by the first conveyance unit 510. A plurality of battery cells 100 to be activated may be disposed on the first activation tray 511.

The vacuum level inside the first chamber 501 may be adjusted from the outside before, while, and after the battery cell 100 is conveyed.

In operation 420, the activation apparatus may perform piercing of a battery cell by using a movement member.

In the activation apparatus 500, a movement member 200 may be used to pick up the battery cell 100 disposed on the first activation tray 511. In this case, the movement member 200 may be in a state in which a piercing pin 211 of a first movement member 210 and a vacuum pad 221 of a second movement member 220 face each other.

In a state in which the piercing pin 211 of the first movement member 210 and the vacuum pad 221 of the second movement member 220 face each other, piercing may be performed as the piercing pin 211 passes through a degassing portion 160 of the battery cell 100.

The piercing of a portion of the battery cell 100 may be performed simultaneously with the movement member 200 gripping the battery cell 100.

In operation 430, the activation apparatus may move the pierced battery cell to a vacuum chamber along a movement line.

A movement line 520 may be disposed in the form that spatially crosses the first chamber 501, the second chamber 502, and the vacuum chamber 503. The movement line 520 may support the movement member 200 from the top so that the movement line can move.

The movement member 200 may be coupled to the movement line 520. The movement member 200 may be coupled to the movement member and move along the movement line 520.

The movement member 200 may move, along the movement line 520, to the vacuum chamber 503 via a first gate 512 formed between the first chamber 501 and the vacuum chamber 503.

When the movement member 200 moves into the vacuum chamber 503 via the first gate 512, the vacuum level inside the first chamber 501 may be adjusted to a vacuum state (e.g., -40 kpa). Also, when the vacuum level of the first chamber 501 becomes a vacuum state (e.g., -40 kpa), the first gate 512 may be opened.

In operation 440, the activation apparatus may perform activation and degassing of the pierced battery cell in the vacuum chamber.

In the activation apparatus 500, the battery cell 100 may be moved to the vacuum chamber 503 by using the movement member 200, and the battery cell 100 may be placed on an activation unit 530 by using the movement member 200.

The battery cell 100 placed on the activation unit 530 may be in a pierced state.

The activation unit 530 may include a pressing jig, and the battery cell 100 may be pressed by the pressing jig. Accordingly, at least charging/discharging of an activation process may be performed. When pressing the battery cell 100, the activation unit 530 may perform pressurization in a high temperature state.

The activation unit 530 may charge/discharge the battery cell 100 in a state in which the battery cell 100 is pressed at a high temperature by the pressing jig. As the battery cell 100 is pressed by the pressing jig during charging/discharging, a gas generated from the battery cell 100 may be gathered in the degassing portion 160. The sealing portion 150 of the battery cell 100 may be formed such that the generated gas may be gathered in the degassing portion 160, but the embodiment is not particularly limited.

The inside of the vacuum chamber 503 may be in a vacuum state (e.g., -40 kpa), and the gas collected in the pierced battery cell 100 is discharged (degassed) to the outside of the battery cell 100 due to a pressure difference. As the pressing jig presses the battery cell 100, the gas inside the battery cell 100 may be more easily discharged (degassed) to the outside.

The gas collected inside the battery cell 100 may be easily discharged to the outside due to the pressure difference and the pressure of the pressing jig.

In operation 450, the activation apparatus may perform sealing of a battery cell by using a movement member.

The battery cell 100, which has been activated and degassed in the activation unit 530, may be gripped and lifted by the movement member 200.

When the movement member 200 picks up (or grips) the battery cell 100, a heating pad 212 of the first movement member 210 and the vacuum pad 221 of the second movement member 220 may be coupled while facing each other. The heating pad 212 and the vacuum pad 211 may perform sealing of the degassing portion 160 of the battery cell 100 while coming into contact with and gripping or fixing the battery cell 100.

In operation 460, the activation apparatus may move the battery cell to the second chamber by using the movement member.

The movement member 200 may grip the sealed battery cell 100 and move the battery cell 100 into the second chamber 502 along the movement line 520.

The movement member 200 may move the battery cell 100 into the second chamber 502 via a second gate 542 between the vacuum chamber 503 and the second chamber 502.

The battery cell 100 may be placed on a second activation tray 541 inside the second chamber 502 by the movement member 200. A plurality of battery cells 100, which have been activated, may be disposed on the second activation tray 541. The activation apparatus 500 may perform sealing of the degassing portion 160 of the battery cell 100 even on the second activation tray 541 by using the heating pad 212 of the first movement member 210 and the vacuum pad 221 of the second movement member 220. The activation apparatus 500 may perform sealing of the degassing portion 160 of the battery cell 100 by using the heating pad 212 and the vacuum pad 221, even while the battery cell is being placed on the second activation tray 541 of the second chamber 502.

The second chamber 502 may adjust a vacuum level inside the second chamber 502. The vacuum level inside the second chamber 502 may be adjusted from an atmospheric state to a vacuum state (e.g., -40 kpa). When the movement member 200 moves into the second chamber 502 via the second gate 542, the vacuum level inside the second chamber 502 may be adjusted to a vacuum state (e.g., -40 kpa). Also, when the vacuum level of the second chamber 502 becomes a vacuum state (e.g., -40 kpa), the second gate 542 may be opened.

The battery cell 100 disposed on the second activation tray 541 may be conveyed to the outside of the activation apparatus 500 by a second conveyance unit 540 of the second chamber 502. In this case, the vacuum level inside the second chamber 502 may be adjusted to an atmospheric state. After the vacuum level is adjusted to the atmospheric state, the battery cell 100 may be conveyed to the outside of the activation apparatus 500 by the second conveyance unit 540.

The vacuum level inside the second chamber 502 may be adjusted before, while, and after the battery cell 100 is conveyed.

### [Description of the Symbols]

100: Battery cell
110: Electrode assembly
120: Pouch
130: Electrode lead
140: Electrode lead
150: Sealing portion
160: Degassing portion
200: Movement member
210: First movement member
211: Piercing pin
212: Heating pad
220: Second movement member
221: Vacuum pad
230: Rotary member
310: Piercing hole
320: Sealing region
500: Activation apparatus
501: First chamber
502: Second chamber
503: Vacuum chamber
510: First conveyance unit
511: First activation tray
512: First gate
520: Conveyance line
530: Activation unit
540: Second conveyance unit
541: Second activation tray
542: Second gate

## Claims

1. An activation apparatus for a secondary battery, comprising:
a first chamber (501) which comprises a first conveyance unit (510) for conveying a battery cell (100) and adjusts a vacuum level in a space in which the first conveyance unit (510) is positioned;
a vacuum chamber (503) which is spatially connected to the first chamber (501), comprises an activation unit (530) configured to perform activation and degassing of a battery cell (100) that is disposed therein and to maintain a vacuum state in a space in which the activation unit (530) is disposed;
a second chamber (502) which is spatially connected to the vacuum chamber (503), comprises a second conveyance unit (540) for conveying a battery cell (100), and is configured to adjust a vacuum level in a space in which the second conveyance unit (540) is positioned;
a movement line (520) disposed to cross the first chamber (501), the vacuum chamber (503), and the second chamber (502); and
a movement member (200) which is connected to the movement line (520), the movement member (200) is configured to move a battery cell (100) along the movement line (520), configured to pierce a battery cell (100) in the first chamber (501) and configured to seal a battery cell (100) in the vacuum chamber (503) or the second chamber (502),
wherein the activation unit (530) is configured perform the activation and degassing of the battery cell (100) therein.

2. The activation apparatus of claim 1, wherein the movement member (200) comprises a first movement member (200) and a second movement member (200),
wherein the first movement member (200) comprises a heating pad (212) on one side surface and a piercing pin (211) on the other surface, and
the second movement member (200) comprises a vacuum pad (221) on one side surface,
wherein the first movement member (200) is configured to be rotated to one of a state in which the piercing pin (211) faces the vacuum pad (221) or a state in which the heating pad (212) faces the vacuum pad (221).

3. The activation apparatus of claim 2, wherein the piercing pin (211) of the first movement member (200) and the vacuum pad (221) of the second movement member (200) are configured to perform the piercing, and
the heating pad (212) of the first movement member (200) and the vacuum pad (221) of the second movement member (200) are configured to perform the sealing.

4. The activation apparatus of claim 1, wherein the activation unit (530) comprises a pressing jig, and the pressing jig is configured to press the battery cell (100) during the activation, thereby performing the degassing.

5. The activation apparatus of claim 1, wherein the first chamber (501) has a first gate (512), and the first gate (512) is configured to be opened when the vacuum level of the first chamber (501) is adjusted to the vacuum state of the vacuum chamber (503).

6. The activation apparatus of claim 1, wherein the second chamber (502) has a second gate (542), and the second gate (542) is configured to be opened when the vacuum level of the second chamber (502) is adjusted to the vacuum state of the vacuum chamber (503).

7. The activation apparatus of claim 1, wherein by the movement member (200) is configured such that, in the sealing of the battery cell (100),
first sealing is performed while the movement member (200) is brought into contact with the battery cell (100) to move the battery cell (100), and
second sealing is performed while the movement member (200) places the battery cell (100) on the second chamber (502).

8. The activation apparatus of claim 1, wherein the first chamber (501) comprises a first activation tray (511) configured such that a battery cell (100) conveyed from the first conveyance unit (510) is disposed on the first activation tray (511), and the second chamber (502) comprises a second activation tray (541) configured such that a battery cell (100) moved from the vacuum chamber (503) is disposed on the second activation tray (541).

9. The activation apparatus of claim 1, configured to activate and degas a battery cell (100) that comprises a sealing portion (320) in which a degassing portion (160) is formed, wherein the apparatus is configured so that a gas inside the battery cell (100) is discharged via the degassing portion (160) by pressing at least a portion of the sealing portion (320).

10. The activation apparatus of claim 1, configures so that the activation of a battery cell (100) is performed in the activation unit (530) after the piercing of the battery cell (100).

11. An activation method for a secondary battery, comprising:
conveying a battery cell (100) to a first chamber (501) by using a first conveyance unit (510), wherein the first chamber (501) adjusts a vacuum level in a space in which the first conveyance unit (510) is positioned;
piercing the battery cell (100) in the first chamber (501) by using a movement member (200);
moving the battery cell (100) to a vacuum chamber (503) along a movement line (520) by using the movement member (200), wherein the vacuum chamber (503) is in a vacuum state and comprises an activation unit (530) that performs activation and degassing of the battery cell (100);
performing the activation and degassing of the battery cell (100) in the activation unit (530) of the vacuum chamber (503);
performing sealing of the battery cell (100) by using the movement member (200); and
moving the battery cell (100) to a second chamber (502) along the movement line (520) by using the movement member (200), wherein the second chamber (502) adjusts a vacuum level.

12. The activation method of claim 11, comprising using a pressing jig to press the battery cell (100) during the activation, thereby performing the degassing.

13. The activation method of claim 11, comprising opening a first gate (512) of the first chamber (501) when the vacuum level of the first chamber (501) is adjusted to the vacuum state of the vacuum chamber (503).

14. The activation method of claim 13, comprising opening a second gate (542) of the second chamber (502) when the vacuum level of the second chamber (502) is adjusted to the vacuum state of the vacuum chamber (503).

15. The activation method of claim 11, comprising performing the activation of the battery cell (100) in the activation unit (530) in a state in which the piercing of the battery cell (100) has been performed.

## Patentansprüche

1. Aktivierungsvorrichtung für eine Sekundärbatterie, umfassend:
eine erste Kammer (501), die eine erste Fördereinheit (510) zum Fördern einer Batteriezelle (100) umfasst und ein Vakuumniveau in einem Raum einstellt, in dem die erste Fördereinheit (510) positioniert ist;
eine Vakuumkammer (503), die räumlich mit der ersten Kammer (501) verbunden ist, eine Aktivierungseinheit (530) umfasst, die konfiguriert ist, um eine Aktivierung und Entgasung einer Batteriezelle (100) durchzuführen, die darin angeordnet ist, und um einen Vakuumzustand in einem Raum aufrechtzuerhalten, in dem die Aktivierungseinheit (530) angeordnet ist;
eine zweite Kammer (502), die räumlich mit der Vakuumkammer (503) verbunden ist, eine zweite Fördereinheit (540) zum Fördern einer Batteriezelle (100) umfasst und konfiguriert ist, um ein Vakuumniveau in einem Raum einzustellen, in dem die zweite Fördereinheit (540) positioniert ist;
eine Bewegungslinie (520), die angeordnet ist, um die erste Kammer (501), die Vakuumkammer (503) und die zweite Kammer (502) zu überkreuzen; und
ein Bewegungselement (200), das mit der Bewegungslinie (520) verbunden ist, wobei das Bewegungselement (200) konfiguriert ist, um eine Batteriezelle (100) entlang der Bewegungslinie (520) zu bewegen, konfiguriert ist, um eine Batteriezelle (100) in der ersten Kammer (501) zu durchstechen, und konfiguriert ist, um eine Batteriezelle (100) in der Vakuumkammer (503) oder der zweiten Kammer (502) dicht zu verschließen,
wobei die Aktivierungseinheit (530) konfiguriert ist, um die Aktivierung und Entgasung der Batteriezelle (100) darin durchzuführen.

2. Aktivierungsvorrichtung nach Anspruch 1, wobei das Bewegungselement (200) ein erstes Bewegungselement (200) und ein zweites Bewegungselement (200) umfasst,
wobei das erste Bewegungselement (200) ein Heizkissen (212) auf einer Seitenoberfläche und einen Durchstechstift (211) auf der anderen Oberfläche umfasst, und
das zweite Bewegungselement (200) ein Vakuumkissen (221) auf einer Seitenoberfläche umfasst,
wobei das erste Bewegungselement (200) konfiguriert ist, um in einen Zustand gedreht zu werden, in dem der Durchstechstift (211) dem Vakuumkissen (221) zugewandt ist, oder einen Zustand, in dem das Heizkissen (212) dem Vakuumkissen (221) zugewandt ist.

3. Aktivierungsvorrichtung nach Anspruch 2, wobei der Durchstechstift (211) des ersten Bewegungselements (200) und das Vakuumkissen (221) des zweiten Bewegungselements (200) konfiguriert sind, um das Durchstechen durchzuführen, und
das Heizkissen (212) des ersten Bewegungselements (200) und das Vakuumkissen (221) des zweiten Bewegungselements (200) konfiguriert sind, um den dichten Verschluss durchzuführen.

4. Aktivierungsvorrichtung nach Anspruch 1, wobei die Aktivierungseinheit (530) eine Pressvorrichtung umfasst, und
die Pressvorrichtung konfiguriert ist, um die Batteriezelle (100) während der Aktivierung zu pressen, wodurch die Entgasung durchgeführt wird.

5. Aktivierungsvorrichtung nach Anspruch 1, wobei die erste Kammer (501) eine erste Tür (512) aufweist, und
die erste Tür (512) konfiguriert ist, um geöffnet zu werden, wenn das Vakuumniveau der ersten Kammer (501) auf den Vakuumzustand der Vakuumkammer (503) eingestellt wird.

6. Aktivierungsvorrichtung nach Anspruch 1, wobei die zweite Kammer (502) eine zweite Tür (542) aufweist, und
die zweite Tür (542) konfiguriert ist, um geöffnet zu werden, wenn das Vakuumniveau der zweiten Kammer (502) auf den Vakuumzustand der Vakuumkammer (503) eingestellt wird.

7. Aktivierungsvorrichtung nach Anspruch 1, wobei das Bewegungselement (200) so konfiguriert ist, dass beim dichten Verschließen der Batteriezelle (100)
ein erstes dichtes Verschließen durchgeführt wird, während das Bewegungselement (200) mit der Batteriezelle (100) in Kontakt gebracht wird, um die Batteriezelle (100) zu bewegen, und
ein zweites dichtes Verschließen durchgeführt wird, während das Bewegungselement (200) die Batteriezelle (100) auf der zweiten Kammer (502) platziert.

8. Aktivierungsvorrichtung nach Anspruch 1, wobei die erste Kammer (501) eine erste Aktivierungsablage (511) umfasst, die so konfiguriert ist, dass eine von der ersten Fördereinheit (510) geförderte Batteriezelle (100) auf der ersten Aktivierungsablage (511) angeordnet ist, und
die zweite Kammer (502) eine zweite Aktivierungsablage (541) umfasst, die so konfiguriert ist, dass eine von der Vakuumkammer (503) bewegte Batteriezelle (100) auf der zweiten Aktivierungsablage (541) angeordnet ist.

9. Aktivierungsvorrichtung nach Anspruch 1, die konfiguriert ist, um eine Batteriezelle (100) zu aktivieren und zu entgasen, die einen Dichtungsabschnitt (320) umfasst, in dem ein Entgasungsabschnitt (160) ausgebildet ist,
wobei die Vorrichtung so konfiguriert ist, dass ein Gas innerhalb der Batteriezelle (100) durch Pressen mindestens eines Abschnitts des Dichtungsabschnitts (320) über den Entgasungsabschnitt (160) abgegeben wird.

10. Aktivierungsvorrichtung nach Anspruch 1, die so konfiguriert ist, dass die Aktivierung einer Batteriezelle (100) in der Aktivierungseinheit (530) nach dem Durchstechen der Batteriezelle (100) durchgeführt wird.

11. Aktivierungsverfahren für eine Sekundärbatterie, umfassend:
Fördern einer Batteriezelle (100) zu einer ersten Kammer (501) unter Verwendung einer ersten Fördereinheit (510), wobei die erste Kammer (501) ein Vakuumniveau in einem Raum einstellt, in dem die erste Fördereinheit (510) positioniert ist;
Durchstechen der Batteriezelle (100) in der ersten Kammer (501) unter Verwendung eines Bewegungselements (200);
Bewegen der Batteriezelle (100) zu einer Vakuumkammer (503) entlang einer Bewegungslinie (520) unter Verwendung des Bewegungselements (200), wobei die Vakuumkammer (503) in einem Vakuumzustand ist und eine Aktivierungseinheit (530) umfasst, die eine Aktivierung und Entgasung der Batteriezelle (100) durchführt;
Durchführen der Aktivierung und Entgasung der Batteriezelle (100) in der Aktivierungseinheit (530) der Vakuumkammer (503);
Durchführen eines dichten Verschließens der Batteriezelle (100) unter Verwendung des Bewegungselements (200); und
Bewegen der Batteriezelle (100) zu einer zweiten Kammer (502) entlang der Bewegungslinie (520) unter Verwendung des Bewegungselements (200), wobei die zweite Kammer (502) ein Vakuumniveau einstellt.

12. Aktivierungsverfahren nach Anspruch 11, umfassend das Verwenden einer Pressvorrichtung, um die Batteriezelle (100) während der Aktivierung zu pressen, wodurch die Entgasung durchgeführt wird.

13. Aktivierungsverfahren nach Anspruch 11, umfassend das Öffnen einer ersten Tür (512) der ersten Kammer (501), wenn das Vakuumniveau der ersten Kammer (501) auf den Vakuumzustand der Vakuumkammer (503) eingestellt wird.

14. Aktivierungsverfahren nach Anspruch 13, umfassend das Öffnen einer zweiten Tür (542) der zweiten Kammer (502), wenn das Vakuumniveau der zweiten Kammer (502) auf den Vakuumzustand der Vakuumkammer (503) eingestellt wird.

15. Aktivierungsverfahren nach Anspruch 11, umfassend das Durchführen der Aktivierung der Batteriezelle (100) in der Aktivierungseinheit (530) in einem Zustand, in dem das Durchstechen der Batteriezelle (100) durchgeführt wurde.

## Revendications

1. Appareil d'activation pour une batterie rechargeable, comprenant :
une première chambre (501) qui comprend une première unité de transport (510) pour transporter une cellule de batterie (100) et ajuster un niveau de vide dans un espace dans lequel la première unité de transport (510) est positionnée ;
une chambre à vide (503) qui est reliée spatialement à la première chambre (501), comprend une unité d'activation (530) configurée pour effectuer l'activation et le dégazage d'une cellule de batterie (100) qui y est disposée et pour maintenir un état de vide dans un espace dans lequel l'unité d'activation (530) est disposée ;
une deuxième chambre (502) qui est reliée spatialement à la chambre à vide (503), comprend une deuxième unité de transport (540) pour transporter une cellule de batterie (100), et est configurée pour ajuster un niveau de vide dans un espace dans lequel la deuxième unité de transport (540) est positionnée ;
une ligne de déplacement (520) disposée pour traverser la première chambre (501), la chambre à vide (503) et la deuxième chambre (502) ; et
un élément de déplacement (200) qui est relié à la ligne de déplacement (520), l'élément de déplacement (200) est configuré pour déplacer une cellule de batterie (100) le long de la ligne de déplacement (520), configuré pour percer une cellule de batterie (100) dans la première chambre (501) et configuré pour étanchéifier une cellule de batterie (100) dans la chambre à vide (503) ou la deuxième chambre (502),
dans lequel l'unité d'activation (530) est configurée pour y effectuer l'activation et le dégazage d'une cellule de batterie (100).

2. Appareil d'activation selon la revendication 1, dans lequel l'élément de déplacement (200) comprend un premier élément de déplacement (200) et un deuxième élément de déplacement (200),
dans lequel le premier élément de déplacement (200) comprend un tampon chauffant (212) sur une des surfaces latérales et une tige de perçage (211) sur l'autre surface, et
le deuxième élément de déplacement (200) comprend un tampon à vide (221) sur une des surfaces latérales,
dans lequel le premier élément de déplacement (200) est configuré pour être tourné à l'un des états dans lequel la tige de perçage (211) est face au tampon à vide (221) ou un état dans lequel le tampon chauffant (212) est face au tampon à vide (221).

3. Appareil d'activation selon la revendication 2, dans lequel la tige de perçage (211) du premier élément de déplacement (200) et le tampon à vide (221) du deuxième élément de déplacement (200) sont configurés pour effectuer le perçage, et
le tampon chauffant (212) du premier élément de déplacement (200) et le tampon à vide (221) du deuxième élément de déplacement (200) sont configurées pour effectuer l'étanchéification.

4. Appareil d'activation selon la revendication 1, dans lequel l'unité d'activation (530) comprend un gabarit de pression, et
le gabarit de pression est configuré pour presser la cellule de batterie (100) pendant l'activation, ce qui effectue le dégazage.

5. Appareil d'activation selon la revendication 1, dans lequel la première chambre (501) a une première grille (512), et
la première grille (512) est configurée pour être ouverte quand le niveau de vide de la première chambre (501) est ajusté à l'état de vide de la chambre à vide (503).

6. Appareil d'activation selon la revendication 1, dans lequel la deuxième chambre (502) a une deuxième grille (542), et
la deuxième grille (542) est configurée pour être ouverte quand le niveau de vide de la deuxième chambre (502) est ajusté à l'état de vide de la chambre à vide (503).

7. Appareil d'activation selon la revendication 1, dans lequel l'élément de déplacement (200) est configuré de sorte que, dans l'étanchéification de la cellule de batterie (100),
une première étanchéification est effectuée pendant que l'élément de déplacement (200) est amené en contact avec la cellule de batterie (100) pour déplacer la cellule de batterie (100), et
une deuxième étanchéification est effectuée pendant que l'élément de déplacement (200) place la cellule de batterie (100) sur la deuxième chambre (502).

8. Appareil d'activation selon la revendication 1, dans lequel la première chambre (501) comprend un premier plateau d'activation (511) configuré de sorte qu'une cellule de batterie (100) transportée de la première unité de transport (510) est disposée sur le premier plateau d'activation (511), et
la deuxième chambre (502) comprend un deuxième plateau d'activation (541) configuré de sorte qu'une cellule de batterie (100) déplacée de la chambre à vide (503) est disposée sur le deuxième plateau d'activation (541).

9. Appareil d'activation selon la revendication 1, configuré pour activer et dégazer une cellule de batterie (100) qui comprend une partie d'étanchéification (320) dans laquelle une partie de dégazage (160) est formée,
dans lequel l'appareil est configuré de sorte qu'un gaz à l'intérieur de la cellule de batterie (100) est déchargé via la partie de dégazage (160) en pressant au moins une partie de la partie d'étanchéification (320).

10. Appareil d'activation selon la revendication 1, configuré de sorte que l'activation d'une cellule de batterie (100) est effectuée dans l'unité d'activation (530) après le perçage de la cellule de batterie (100).

11. Procédé d'activation pour une batterie rechargeable, consistant à :
transporter une cellule de batterie (100) à une première chambre (501) en utilisant une première unité de transport (510), dans lequel la première chambre (501) ajuste un niveau de vide dans un espace dans lequel la première unité de transport (510) est positionnée ;
percer la cellule de batterie (100) dans la première chambre (501) en utilisant un élément de déplacement (200) ;
déplacer la cellule de batterie (100) à une chambre à vide (503) le long d'une ligne de déplacement (520) en utilisant l'élément de déplacement (200), dans lequel la chambre à vide (503) est dans un état de vide et comprend une unité d'activation (530) qui effectue l'activation et le dégazage de la cellule de batterie (100) ;
effectuer l'activation et le dégazage de la cellule de batterie (100) dans l'unité d'activation (530) de la chambre à vide (503) ;
effectuer l'étanchéification de la cellule de batterie (100) en utilisant l'élément de déplacement (200) ; et
déplacer la cellule de batterie (100) à une deuxième chambre (502) le long de la ligne de déplacement (520) en utilisant l'élément de déplacement (200), dans lequel la deuxième chambre (502) ajuste un niveau de vide.

12. Procédé d'activation selon la revendication 11, consistant à utiliser un gabarit de pression pour presser la cellule de batterie (100) pendant l'activation, ce qui effectue le dégazage.

13. Procédé d'activation selon la revendication 11, consistant à ouvrir une première grille (512) de la première chambre (501) quand le niveau de vide de la première chambre (501) est ajusté à l'état de vide de la chambre à vide (503).

14. Procédé d'activation selon la revendication 13, consistant à ouvrir une deuxième grille (542) de la deuxième chambre (502) quand le niveau de vide de la deuxième chambre (502) est ajusté à l'état de vide de la chambre à vide (503).

15. Procédé d'activation selon la revendication 11, consistant à effectuer l'activation de la cellule de batterie (100) dans l'unité d'activation (530) dans un état dans lequel le perçage de la cellule de batterie (100) a été effectué.
